# EUROPÄISCHE PATENTANMELDUNG

(11) **EP 2 397 699 A1**
(43) Veröffentlichungstag der Anmeldung: **21.12.2011**
(21) Anmeldenummer: 10290326.7
(22) Anmeldetag: 16.06.2010
(51) Int. Cl.: F04D 25/06, F04D 25/08, F04D 29/42, F04D 29/62, F04D 29/66, H02K 5/24, B60H 1/00

(54) **Gebläse für eine Klimaanlage eines Kraftfahrzeuges**

(71) Anmelder: Behr France Rouffach SAS, 68250 Rouffach (FR)
(72) Erfinder: Fleith, Emmanuel, 68320 Holtzwihr (FR); Klein, Henri, 68360 Soultz (FR); Martin, Fabrice, 68150 Ribeauvillé (FR)
(74) Vertreter: Grauel, Andreas

(57) **Zusammenfassung**

Die Erfindung betrifft ein Gebläse für eine Klimaanlage eines Kraftfahrzeuges, bei welchem ein Motor (4) ein Laufrad (6) antreibt, das in einem Gebläsegehäuse (7, 8) angeordnet ist, wobei das Gebläsegehäuse (7, 8) mit einer Lufteinlassabdeckung (2) verbunden ist und der von einem Motorgehäuse (5) umgebene Motor (4) in einen von der Lufteinlassabdeckung (2) überspannten Bereich ragt.

Um eine Übertragung der Vibrationen, welche von dem Motor des Gebläses erzeugt werden, in den Fahrgastraum des Fahrzeuges zu unterbinden, ist das Motorgehäuse (5) mit der Lufteinlassabdeckung (2) über eine mechanische Verbindung (10,12,13) fest verbunden.

## Beschreibung

Die Erfindung betrifft ein Gebläse für eine Klimaanlage eines Kraftfahrzeuges, bei welchem ein Motor ein Laufrad antreibt, das in einem Gebläsegehäuse angeordnet ist, wobei das Gebläsegehäuse mit einer Lufteinlassabdeckung verbunden ist und der von einem Motorgehäuse umgebene Motor in den von der Lufteinlassabdeckung überspannten Bereich ragt.

Bei Gebläsen, die in Klimaanlagen eines Kraftfahrzeuges eingesetzt werden, erzeugt der Motor, welcher ein Laufrad antreibt und innerhalb einer Lufteintrittsöffnung des Gebläses angeordnet ist, Vibrationen. Die durch den Motor verursachten Vibrationen werden durch die Insassen des Fahrzeuges deutlich wahrgenommen und beeinflussen den Komfort des Fahrzeuges nachteilig.

Um das Gebläsegehäuse von Vibrationen zu entkoppelt, wird der Motor mit einem Motorgehäuse umspritzt. Dieses umspritzte Motorgehäuse ist Teil des Gebläsegehäuses. Eine solche Entkopplungslösung ist aber nicht ausreichend, um Vibrationen, welche durch den Motor auf das Kraftfahrzeug übertragen werden, zu unterbinden, da die Vibrationen durch das Gewicht des Motors verstärkt werden.

Der Erfindung liegt somit die Aufgabe zugrunde, ein Gebläse anzugeben, bei welchem die durch den Motor verursachten Vibrationen reduziert werden, wodurch der Fahrkomfort des Fahrzeuges erhöht wird.

Erfindungsgemäß wird die Aufgabe dadurch gelöst, dass das Motorgehäuse mit der Lufteinlassabdeckung über eine mechanische Verbindung fest verbunden ist. Durch die mechanische Verbindung zwischen Motorgehäuse und Lufteinlassabdeckung erhöht sich die Steifigkeit des Gebläses, wodurch die Vibrationen reduziert werden, da die Resonanzfrequenz des Gebläses sich erhöht. Vorzugsweise sind keine Vibrationen für den Fahrzeuginsassen mehr spürbar, wenn die Resonanzfrequenz höher liegt als die maximale Drehzahl des Motors.

Vorteilhafterweise greift die mechanische Verbindung an einer Position des Motorgehäuses ein, welche annähernd den größten Abstand zum Laufrad aufweist. Somit wird sichergestellt, dass die mechanische Verbindung an der Stelle eingreift, wo die Bewegung des Motorgehäuses am größten ist. Durch die Anbindung des Endpunktes der Oberfläche des Motorgehäuses an die Lufteinlassabdeckung wird gewährleistet, dass eine Ausgleichbewegung des Motorgehäuses unterbunden wird, da die Vibrationsamplitude in ihrer Ausdehnung eingeschränkt wird.

In einer Ausgestaltung ist die mechanische Verbindung lösbar ausgebildet. Mittels einer lösbaren Verbindung ist eine Wartung des Gebläses bzw. ein Austausch des Motors problemlos möglich. Darüber hinaus lässt sich die Steifigkeit der mechanischen Verbindung durch eine lösbare Verbindung variieren. Somit kann immer genau die Steifigkeit eingestellt werden, welche notwendig ist, um die Resonanzfrequenz des Motorgehäuses zu erhöhen.

In einer Variante ist die mechanische Verbindung als Schraubverbindung ausgebildet, die eine Schraubeneinführanordnung und eine Schraubenaufnahme aufweist, wobei die Schraubenaufnahme an dem Motorgehäuse befestigt ist. Mittels der Schraubverbindung kann genau die Steifigkeit der Verbindung gewählt werden, welche dazu führt, dass die Vibrationsamplitude in ihrer Ausdehnung eingeschränkt wird. Die Schraube ist genau dort positioniert, wo die Ausgleichbewegung des Motorgehäuses am größten ist. Dadurch, dass die Ausgleichbewegung unterbunden wird, werden keine Vibrationen mehr in das Fahrzeug übertragen, wodurch sich der Fahrkomfort für die Fahrzeuginsassen verbessert.

In einer Weiterbildung ist die Schraubenaufnahme einstückig in das Motorgehäuse integriert. Die Schraubenaufnahme ist somit kostengünstig und einfach in einem Arbeitsschritt mit dem Motorgehäuse herstellbar.

In einer anderen Ausgestaltung ist die, mit einer Öffnung versehene Schraubeneinführanordnung an der Lufteinlassabdeckung ausgebildet, welche eine, der Schraubenaufnahme zugewandte Verlängerung aufweist, die die Schraubenaufnahme umfasst. Mittels dieser Verlängerung lässt sich die Schraubverbindung besonders gut justieren, weshalb sie auch in der Serienfertigung einfach ausführbar ist. Aufgrund dessen, dass die Verlängerung die Schraubenaufnahme umfasst, werden eine Öffnung der Schraubeneinführanordnung und eine Öffnung der Schraubenaufnahme zuverlässig übereinander geführt, und eine Schraube kann problemlos eingesetzt werden.

Insbesondere ist die Verlängerung der Schraubeneinführanordnung annähernd ringförmig ausgebildet. Durch die ringförmige Ausbildung verbessert sich die Justierbarkeit von Motorgehäuse und Lufteinlassabdeckung im Bereich der Schraubverbindung.

Vorteilhafterweise ist die Schraubeneinführanordnung einstückig in die Lufteinlassabdeckung integriert. Insbesondere wenn die Lufteinlassabdeckung aus Kunststoff hergestellt ist, lässt sich beim Herstellungsprozess der Lufteinlassabdeckung im selben Arbeitsschritt auch die Schraubeneinführanordnung ausführen, indem mittels einer Spritzgusstechnik die Schraubeneinführanordnung in der Form der Lufteinlassabdeckung mit ausgeformt wird.

In einer anderen Ausgestaltung ist zwischen dem Motor und dem Motorgehäuse ein Schwingungsdämpfungsmittel angeordnet, welches einen Raum zwischen dem Motor und dem Motorgehäuse annähernd vollständig ausfüllt. Ein solches Schwingungsdämpfungsmittel unterstützt die Entkopplung der durch den Motor hervorgerufenen Vibrationen von dem Motorgehäuse.

In einer weiteren Variante weist die Lufteinfassabdeckung mindestens einen Verstärkungssteg auf. Dadurch wird die Lufteinlassabdeckung weiter versteift und ist unempfindlicher gegenüber den Vibrationen.

Ferner ist der mindestens eine Verstärkungssteg an der dem Motor abgewandten Seite der Lufteinlassabdeckung angeordnet. Dadurch wird der Bereich der Lufteinlassabdeckung verkleinert, in welchem der Motor hineinragt, weshalb sich die Abmessungen des Gebläses verringern.

Zur einfachen Montage des Gebläses ist die Lufteinlassabdeckung an der Außenseite des Gebläsegehäuses befestigt.

Vorteilhafterweise ist die Lufteinlassabdeckung mit dem Gebläsegehäuse verschraubt. Dabei kann insbesondere die Schraube, welche die Lufteinlassabdeckung mit dem Motorgehäuse verbindet, im gleichen Arbeitsschritt verschraubt werden, bei welchem die Lufteinlassabdeckung mit dem Gebläsegehäuse ebenfalls durch Schrauben verbunden wird. Durch diese Vorgehensweise wird Zeit bei der Montage des Gebläses eingespart.

In einer Weiterbildung ist das Gebläsegehäuse zur Aufnahme eines radialen Laufrades zweiteilig ausgebitdet. Aufgrund der Verwendung eines radialen Laufrades wird das Gebläse besonders flach und Platzsparend ausgebildet.

Die Erfindung lässt zahlreiche Ausführungsformen zu. Eine davon soll anhand der in der Zeichnung dargestellten Figuren näher erläutert werden.

Es zeigt:
- Figur 1:: Perspektivische Ansicht des Gebläses
- Figur 2:: Perspektivische Ansicht des Gebläses ohne Lufteinlassabdeckung
- Figur 3:: Querschnitt durch das Gebläse

Gleiche Merkmale sind mit gleichen Bezugszeichen gekennzeichnet.

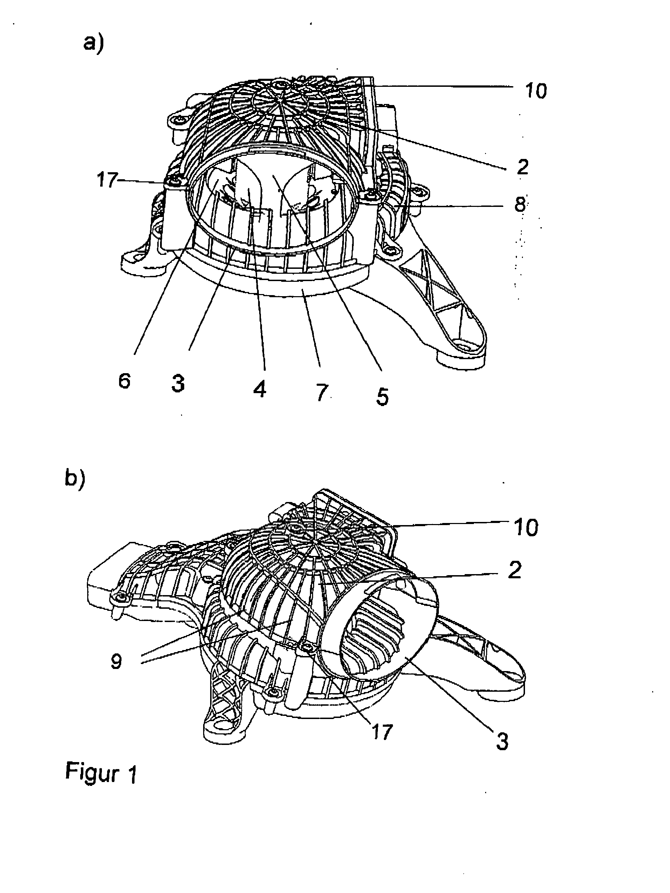

In Figur 1 sind zwei unterschiedliche perspektivische Ansichten des Gebläses dargestellt. So zeigt Figur 1a eine Ansicht, bei welcher das Gebläse 1 von der Seite der Lufteinlassöffnung 3 zu sehen ist. Im Inneren ist ein Motor 4 sichtbar, welcher von einem Motorgehäuse 5 umgeben ist. Der Motor 4 und das Motorgehäuse 5 sind dabei von einer Lufteinlassabdeckung 2 gegenüber der Umgebung abgeschirmt. Die Lufteinlassabdeckung 2 ist annähernd kuppelförmig ausgebildet und mündet seitlich in die Lufteinlassöffnung 3. Der Motor 4 ragt mit seinem Motorgehäuse 5 in den Bereich, welcher von der annähernd kuppelförmig ausgebildeten Lufteinlassabdeckung 2 aufgespannt wird.

Die Lufteinlassabdockung 2 liegt auf einem Gebläsegehäuseoberteil 8 auf, welches das Laufrad 6 umfasst und das durch den Gebläsegehäuseboden 7 abgeschlossen ist. Sowohl in der Figur 1a als auch in der Figur 1b ist eine Schraube 10 an der Lufteinlassabdeckung 2 sichtbar. Die Lufteinlassabdeckung 2 weist zahlreiche Stege 9 auf, die der Lufteinlassabdeckung 2 eine zusätzliche Steifigkeit verleihen.

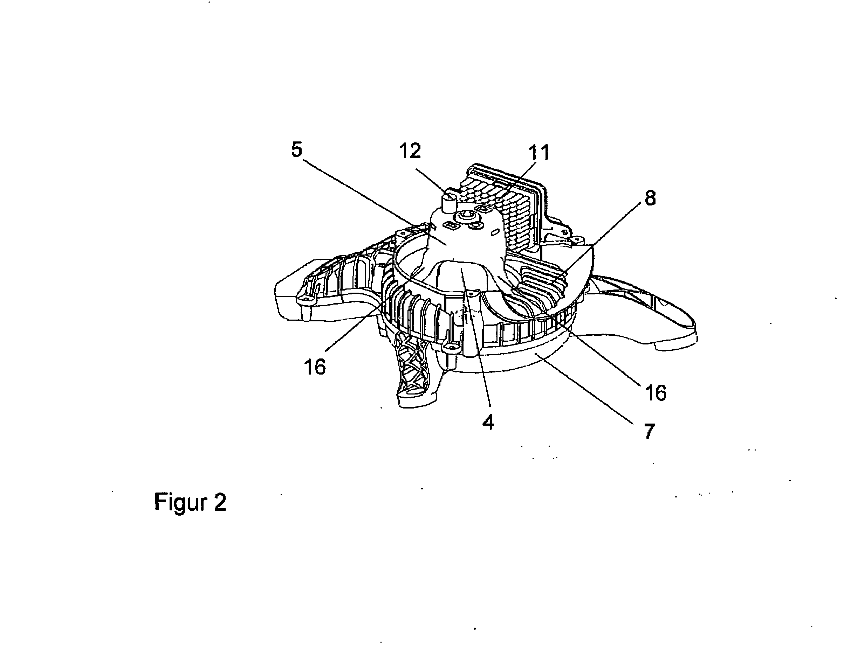

Das Gebläse 1 ohne Lufteinlassabdeckung 2 ist in Figur 2 dargestellt. Dabei ist ersichtlich, dass der Motor 4 mit dem, den Motor 4 topfähnlich umgebenden Motorgehäuse 5 abgedeckt ist. Nahe dem Motor 4 ist eine elektronische Regleranordnung 11 angeordnet, welche den Motor 4 ansteuert. Das Motorgehäuse 5 ist mit mehreren Stegen 16 annähernd in der Höhe des Gebläsegehäuseoberteiles 8 befestigt. Auf der dem Laufrad 6 entgegengesetzten Seite des Motorgehäuses 5 ist eine Schraubenaufnahme 12 ersichtlich. Diese Schraubenaufnahme 12 besteht wie das Motorgehäuse 5 aus Kunststoff und ist mit dem Motorgehäuse 5 einstückig hergestellt, Das bedeutet, dass die Schraubenaufnahme und das Motorgehäuse in einem Arbeitsgang als ein Teil aus Kunststoff geformt sind.

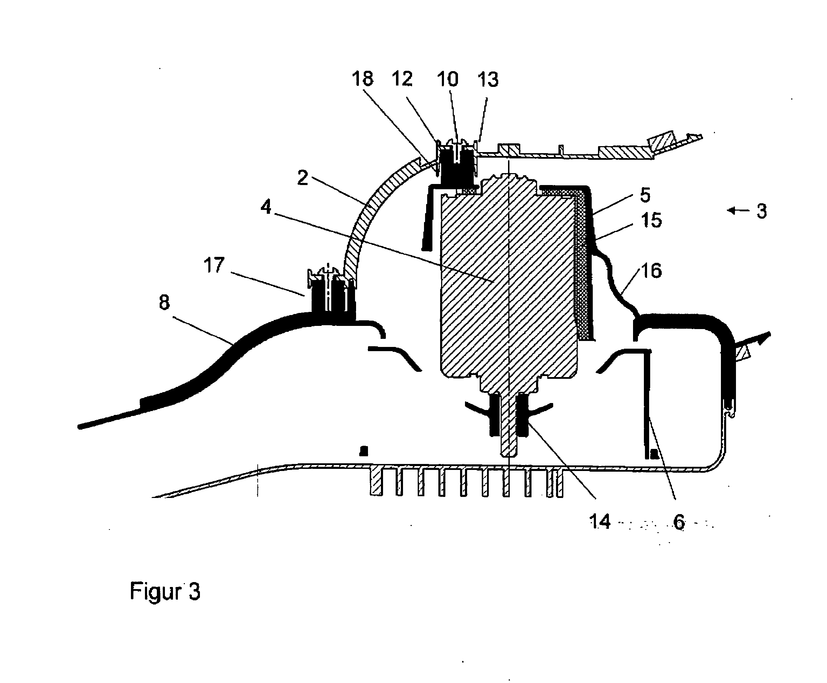

In Figur 3 ist ein Querschnitt durch das Gebläse 1 dargestellt. Daraus ist ersichtlich, dass das Motorgehäuse 5 an dem Gebläsegehäuseoberteil 8 befestigt ist. Das Gebläsegehäuseoberteil 8 weist eine einstückig an dem Gebläseoberteil 8 ausgebildete Schraubverbindung 17 auf, an welcher die Lufteinlassabdeckung 2 mit dem Gebläsegehäuseoberteil 8 verschraubt ist. Die Lufteinlassabdeckung 2 wölbt sich aus der Ebene des Gebläsegehäuseoberteiles 8 hinaus und überdeckt den Motor 4, welcher das Gebläsegehäuseoberteil 8 überragt. Der Motor 4 ist dabei mit einem Schwingungsdämpfungsmittel 15 aus Kunststoff überzogen, an welchem sich das Motorgehäuse 5 nahtlos anschließt. Der Motor 4 ist in der Motorachsaufnahme 14 des Laufrades 6 gelagert und treibt dieses an.

Auf der entgegengesetzten Seite zum Laufrad 6 weist das Motorgehäuse 5 eine einstückig mit dem Motorgehäuse 5 integral verbundene Schraubenaufnahme 12 auf. Demgegenüber liegt eine Schraubeneinführanordnung 13, welche ebenfalls integral aus der Lufteinlassabdeckung 2 ausgebildet ist. Bei der Montage werden die aus Kunststoff bestehende Schraubeneinführanordnung 13 der Lufteinlassabdeckung und die ebenfalls aus einem Kunststoff bestehende Schraubenaufnahme 12 des Motorgehäuses 5 in Übereinstimmung gebracht, wobei eine Verlängerung 18 der Schraubeneinführanordnung 13 als Justiereinrichtung ausgebildet ist und die Schraubenaufnahme 12 umgreift. Dadurch wird ein sicherer Sitz der Schraubeneinführanordnung 13 auf der Schraubenaufnahme 12 gewährleistet. Anschließend wird die Schraube 10 durch die Schraubeneinführanordnung hindurch in die Schraubenaufnahme 12 eingeschraubt. Mit dieser nur einen Schraubverbindung 10, 12, 13 wird sichergestellt, dass das Gebläse 1 eine Steifigkeit gegenüber den durch den Motor 4 hervorgerufenen Vibrationen erreicht und die radialen Bewegungen zwischen dem Motorgehäuse 5 und den verbleibenden Gehäuseteilen, wie der Lufteinlassabdeckung 2 und dem Gebläsegehäuseoberteil 8 unterbunden werden.

## Patentansprüche

1. Gebläse für eine Klimaanlage eines Kraftfahrzeuges, bei welchem ein Motor (5) ein Laufrad (6) antreibt, das in einem Gebläsegehäuse (7, 8) angeordnet ist, wobei das Gebläsegehäuse (7, 8) mit einer Lufteinlassabdeckung (12) verbunden ist und der von einem Motorgehäuse (5) umgebene Motor (4) in den von der Lufteinlassabdeckung (2) überspannten Bereich ragt, **dadurch gekennzeichnet, dass** das Motorgehäuse (5) mit der Lufteinlassabdeckung (12) über eine mechanische Verbindung (10, 12, 13) fest verbunden ist.

2. Gebläse nach Anspruch 1, **dadurch gekennzeichnet, dass** die mechanische Verbindung (10, 12, 13) an einer Position des Motorgehäuses (5) eingreift, welche annähernd den größten Abstand zum Laufrad (6) aufweist.

3. Gebläse nach Anspruch 1 oder 2, **dadurch gekennzeichnet, dass** die mechanische Verbindung (10, 12, 13) lösbar ausgebildet ist.

4. Gebläse nach Anspruch 3, **dadurch gekennzeichnet, dass** die mechanische Verbindung (10, 12 13) als Schraubverbindung ausgebildet ist, die eine Schraubeneinführanordnung (13) und eine Schraubenaufnahme (12) aufweist, wobei die Schraubenaufnahme (12) an dem Motorgehäuse (5) befestigt ist.

5. Gebläse nach Anspruch 4, **dadurch gekennzeichnet, dass** die Schraubenaufnahme (12) einstückig in das Motorgehäuse (5) integriert ist.

6. Gebläse nach Anspruch 4 oder 5, **dadurch gekennzeichnet, dass** die, mit einer Öffnung versehene Schraubeneinführanordnung (13) an der Lufteinlassabdeckung (2) ausgebildet ist, welche einen der Schraubenaufnahme (12) zugewandte Verlängerung (18) aufweist, die die Schraubenaufnahme (12) umfasst.

7. Gebläse nach Anspruch 6, **dadurch gekennzeichnet, dass** die Verlängerung (18) der Schraubeneinführanordnung (13) annähernd ringförmig ausgebildet ist.

8. Gebläse nach Anspruch 6 oder 7, **dadurch gekennzeichnet, dass** die Schraubeneinführanordnung (13) einstückig in die Lufteinlassabdeckung (2) integriert ist.

9. Gebläse nach mindestens einem der vorhergehenden Ansprüche, **dadurch gekennzeichnet, dass** zwischen dem Motor (4) und dem Motorgehäuse (5) ein Schwingungsdämpfungsmittel (15) angeordnet ist, welches einen Raum zwischen dem Motor (4) und dem Motorgehäuse (5) annähernd vollständig ausfüllt.

10. Gebläse nach mindestens einem der vorhergehenden Ansprüche, **dadurch gekennzeichnet, dass** die Lufteinlassabdeckung (2) mindestens einen Verstärkungssteg (9) aufweist.

11. Gebläse nach Anspruch 10, **dadurch gekennzeichnet, dass** der mindestens eine Verstärkungssteg (9) an der, dem Motor (4) abgewandten Seite der Lufteinlassabdeckung (2) angeordnet ist.

12. Gebläse nach Anspruch 10 oder 11, **dadurch gekennzeichnet, dass** die Lufteinlassabdeckung (2) an der Außenseite des Gebläsegehäuses (7, 8) befestigt ist.

13. Gebläse nach Anspruch 12, **dadurch gekennzeichnet, dass** die Lufteinlassabdeckung (2) mit dem Gebläsegehäuse (7, 8) verschraubt ist.

14. Gebläse nach mindestens einem der vorhergehenden Ansprüche, **dadurch gekennzeichnet, dass** das Gebläsegehäuse (7, 8) zur Aufnahme eines radialen Laufrades (6) zweiteilig ausgebildet ist.
